# EUROPÄISCHE PATENTSCHRIFT

(11) **EP 0 525 662 B1**
(45) Veröffentlichungstag und Bekanntmachung des Hinweises auf die Patenterteilung: **03.04.1996**
(21) Anmeldenummer: 92112654.6
(22) Anmeldetag: 24.07.1992
(51) Int. Cl.: H01R 4/30, H01R 13/52, H01H 9/02, F16B 37/14, F16B 33/00, H01H 13/06

(54) **Abdichtung einer kombinierten Kontakt- und Befestigungsschraube für elektrische Schaltgeräte oder Anschlussteile**
Sealing device for a fastening screw for making electrical contact with electric switching devices or terminals
Dispositif d'étanchéité d'une vis de fixation mécanique et de contact électrique pour appareils de commutation électrique ou éléments de connexion

(30) Priorität: 31.07.1991 DE 9109479 U; 29.08.1991 DE 9110682 U; 15.05.1992 DE 9206632 U
(43) Veröffentlichungstag der Anmeldung: 03.02.1993
(73) Patentinhaber: Merit-Elektrik GmbH, D-51643 Gummersbach (DE)
(72) Erfinder: Merten, Günter, Landrijiet RBT 04 (MT)
(74) Vertreter: Schwarz, Klaus-Jürgen, Dipl.-Ing.

(56) Entgegenhaltungen:
- DE-A- 3 220 584
- DE-C- 3 936 411
- GB-A- 916 161
- US-A- 4 129 060

## Beschreibung

Die Erfindung betrifft eine Kombination einer Abdichtung und einer Kontaktplatte mit einer Kontakt- und Befestigungsschraube für elektrische Schaltgeräte oder Anschlußteile und einer elastisch nachgiebigen Dichtung, in die eine ringförmige Dichtschulter integriert ist, die beim Anziehen der Befestigungsschraube gegen deren Schraubenkopf abdichtet, wobei die Durchführungsöffnung für die Befestigungsschraube an einer Kontaktplatte des Schaltgerätes oder der Anschlußteile ebenso wie die Dichtschulter einen nur geringfügig größeren Innendurchmesser als der Schaft der Befestigungsschraube derart aufweist, daß der Kopf der Befestigungsschraube beim Anschrauben am Rand der Durchführungsöffnung eine elektrisch leitende Verbindung zu der Kontaktplatte herstellt, und wobei die Dichtung im Anschluß an die Dichtschulter einen rohrförmigen Turmfortsatz aufweist, der den Kopf der Befestigungsschraube überragt.

Aus Wirtschaftlichkeitsgründen werden zum Beispiel im Fahrzeugbau Befestigungsschrauben gleichzeitig zur Herstellung einer elektrisch leitenden Verbindung, zum Beispiel einer Masseverbindung zu elektrischen Geräten, wie Schalter, Kabelanschlüssen, Kontaktplatten und dergleichen, benutzt.

Je nach Anbringungsart sind solche Befestigungsschrauben den schädlichen Einflüssen von Feuchtigkeit und Schmutz ausgesetzt, durch die die Leitfähigkeit der elektrischen Verbindung gefährdet wird, wobei unter Umständen auch entlang dem Schraubgewinde der Befestigungsschraube Feuchtigkeit wandern und so unerwünschte Schäden verursachen kann.

Eine gute Abdichtung der Befestigungsschraube ist daher wünschenswert, was aber bisher dadurch erschwert wird, daß die bisher bekannten Abdichtungen entweder einen zusätzlichen Arbeitsaufwand erfordern, wenn nämlich Dichtkappen oder Dichtstöpsel verwendet werden müssen, die erfahrungsgemäß häufig nicht zuverlässig angebracht werden, oder die Dichtwirkung der verwendeten Abdichtmittel ist unbefriedigend.

Aus DE 32 20 584 A1 ist eine Kombination einer Abdichtung und einer Kontaktplatte für einen Türkontaktschalter mit einem Dichtelement aus Gummi oder elastischem Kunststoff für eine Schraubverbindung bekannt, bei dem in eine Gummi- oder Kunststoffdichtung eine Dichtschulter integriert ist, die beim Anziehen der Befestigungsschraube gegen deren nach unten konisch verjüngten Schraubenkopf abdichtet. Die Durchführungsöffnung für die Befestigungsschraube an der Kontaktplatte des Türkontaktschalters hat dabei einen nur geringfügig größeren Durchmesser als der Schaft der Befestigungsschraube, so daß der nach unten konisch verjüngte Kopf der Befestigungsschraube beim Anschrauben am Rand der Durchführungsöffnung eine elektrisch leitende Verbindung zu der Kontaktplatte herstellt. Die Dichtschulter der zwischen der Unterseite des konisch verjüngten Kopfes der Befestigungsschraube und der Kontaktplatte angeordneten ringförmigen Dichtung hat einen etwas größeren Innendurchmesser als die Durchführungsöffnung an der Kontaktplatte.

Das bekannte Dichtelement hat in einer ersten Ausführungsform eine den nach unten konisch verjüngten Schraubenkopf einer Linsensenkschraube aufnehmende Ausformung, deren oberhalb der Kuppe des Schraubenkopfes liegender Bereich unter Druck an der Kuppe des Schraubenkopfes anliegt. Bei einer zweiten Ausführungsform des Dichtelementes ist die Ausformung an ihrem freien Ende einstückig mit einem trichterförmig nach außen erweiterten turmartigen Aufsatz versehen, der im eingebauten Zustand des Dichtelementes abdichtend an einem vorgeschalteten, nicht dargestellten Bauteil anliegt. Hierbei wird der Schraubenkopf allerdings erst durch das zusätzliche vorgeschaltete Bauteil geschützt.

Aus US-A-4 129 060 ist weiterhin eine selbstschließende Abdeckung für den Kopf einer Befestigungsschraube bekannt, die aus einem elastischen Kunstharz einstückig geformt ist und einen flachen Dichtring aufweist, der den Kopf der Befestigungsschraube untergreift und den Schraubenschaft eng umschließt. Mit dem Dichtring sind an dessen Umfang aufragende Verschlußlappen mittels Scharniergelenken einstückig verbunden, wobei von den Verschlußlappen neben den Scharniergelenken spitze Schließfinger nach unten hervorstehen, die beim Anziehen der Befestigungsschraube mit dem diese umschließenden Dichtring gegen die Oberfläche eines mit der Schraube zu befestigenden Teiles angedrückt werden und dabei radial nach außen wandern, so daß die Verschlußlappen der Abdeckung sich über dem Kopf der Befestigungsschraube schließen. Eine solche Abdeckung ist allein schon wegen der beim Befestigungsvorgang radial nach außen wandernden Schließfinger für eine Verwendung in Verbindung mit einer Abdichtvorrichtung nach dem Oberbegriff des Anspruches 1 nicht geeignet. Außerdem ist bei dieser bekannten Abdeckung nicht hinreichend sichergestellt, daß sich die Verschlußlappen der Abdichtkappe auch dicht um den Kopf der Befestigungsschraube schließen.

Aus GB-A-916 161 sind ferner Abdeckkappen aus einem elektrisch nicht leitenden Kunststoff oder Gummi für den Kopf von Befestigungsschrauben bekannt, die mit einem ringförmigen Innenwulst in eine ringförmige Umfangsnut am Schraubenkopf eingreifen und aufgrund der Elastizität des Kunststoffmaterials von oben auf den Schraubenkopf aufgeschnappt werden können. Auch diese bekannten Abdeckkappen dienen nur dem Schutz einzelner Befestigungsschrauben, ohne daß beim Anziehen der Befestigungsschrauben eine zusätzliche Abdichtwirkung erzielt wird.

Aus DE-C-39 36 411 ist weiterhin eine Abdeckkappe zum feuchtigkeits- und staubdichten Abdecken eines axial beweglichen Schalterstößels bekannt, die aus einem balgähnlich angeformten, einseitig offenen Körper aus elastomerem Werkstoff besteht. Dieser balgähnlich angeformte Körper weist in seinem Öffnungsbereich eine diesen im wesentlichen vollständig umlaufende Hinterschneidung auf, in die ein Dichtring mit im wesentlichen kreisförmigem Querschnitt unter innerem Einschluß eines kragenförmigen Ansatzes am Schalter rings um den Schalterstößel eingreift. Auch diese balgförmige Abdeckkappe ist in Verbindung mit der Kombination einer Abdichtung und einer Kontaktplatte mit einer Kontakt- und Befestigungsschraube für elektrische Schaltgeräte oder Anschlußteile nach dem Oberbegriff des Anspruches 1 nicht geeignet.

Der Erfindung liegt die Aufgabe zugrunde, die Kombination einer Abdichtung und einer Kontaktplatte mit einer Kontakt- und Befestigungsschraube für elektrische Schaltgeräte oder Anschlußteile nach dem Oberbegriff des Anspruches 1 bei einem einfachen konstruktiven Aufbau und leichter Montierbarkeit besonders hinsichtlich des Schutzes des Schraubenkopfes der kombinierten Kontakt- und Befestigungsschraube weiter zu verbessern, aber auch die Verwendung anderer Schraubenkopfarten zu ermöglichen.

Diese Aufgabe wird gemäß der Erfindung dadurch gelöst, daß die Dichtschulter der Dichtung derart hinterschnitten ist, daß sich der Turmfortsatz beim Anziehen der Befestigungsschraube mehr und mehr kappenförmig schließend über den Schraubenkopf legt.

Die Erfindung hat den Vorteil, daß der rohrförmige Turmfortsatz der nachgiebigen Dichtung, der den Kopf der Befestigungsschraube im Anschluß an die Dichtschulter überragt, sich beim Anziehen der Befestigungsschraube durch eine ringförmige Hinterschneidung der Dichtschulter von selbst mehr und mehr kappenförmig schließend über den Schraubenkopf legt und diesen somit durch einfache technische Maßnahmen ohne zusätzliche Hilfsmittel und auch ohne jeglichen zusätzlichen Arbeits- und Materialaufwand durch eine vollständige oder zumindest teilweise Abdeckung gegen mechanische Beschädigungen und äußere korrodierende oder verschmutzende Einflüsse sicher schützt.

In Abhängigkeit von der angestrebten Härte des elastisch nachgiebigen Dichtungsteiles der Abdichtung ist es dabei besonders vorteilhaft, wenn die Dichtung eine der Kontaktplatte zugewandte innenliegende ringförmige Einschnürung unterhalb der hinterschnittenen Dichtschulter aufweist, durch die einerseits das Festspannen der Kontakt- und Befestigungsschraube erleichtert und andererseits auch das Zusammenziehen des Turmfortsatzes über dem Schraubenkopf mit einfachen konstruktiven Mitteln weiter verbessert wird.

Eine den jeweiligen Anforderungen entsprechend gestaltete Kontaktplatte, insbesondere im Bereich der Schraubendurchführungsöffnung, ermöglicht eine weitere Funktionsverbesserung. So kann die Kontaktplatte in einer weiteren vorteilhaften Ausführungsform rings um die Durchführungsöffnung einen ringförmigen Kragen aufweisen, der von einer ringförmigen Vertiefung für die Aufnahme der Dichtschulter umgeben ist, so daß auch Befestigungsschrauben mit einem an seiner Unterseite flach, ballig oder ähnlich ausgebildeten Schraubenkopf verwendet werden können. Von Vorteil kann es dabei auch sein, wenn die ringförmige Dichtschulter an ihrem Innenumfang gegen die Unterseite des Schraubenkopfes wulstförmig aufgewölbt ist, um hierdurch die Abdichtung bei den verschiedensten Schraubenkopfformen noch sicherer zu gestalten.

Das Zusammenziehen des Turmfortsatzes über dem Schraubenkopf kann auch noch dadurch weiter verbessert werden, daß die Dichtung zusätzlich eine den Fußansatz des Turmfortsatzes umschließende ringförmige äußere Einschnürung aufweist, die vorteilhafterweise etwa in gleicher Höhe mit dem Fuß der innenliegenden Dichtschulter angeordnet sein kann.

Zur Vermeidung einer äußeren Verschmutzung der Abdichtung kann es dabei weiterhin von Vorteil sein, wenn der Stössel des Schalters durch eine mit der Abdichtung einstückig ausgebildete, sich zum Stößelende hin im wesentlichen konisch verjüngende Abdeckkappe abgedichtet ist, die je nach der Hublänge des Stößelschalters im Anschluß an den endseitigen Kappenteil auch noch einen nach Art eines Faltenbalges konisch nach innen eingezogenen Zwischenabschnitt aufweisen kann.

Bevorzugte Ausführungsbeispiele der Erfindung sind in der Zeichnung schematisch dargestellt. Es zeigen
- Fig. 1: eine Seitenansicht einer Abdichtung einer kombinierten Kontakt- und Befestigungsschraube in Verbindung mit einer Abdeckkappe für einen rein schematisch dargestellten Türkontaktschalter,
- Fig. 2: eine Draufsicht auf die Abdichtung in Richtung des Pfeiles II von Fig. 1,
- Fig. 3: eine Fig. 1 entsprechende Seitenansicht einer demgegenüber abgewandelten zweiten Abdichtung mit schematisch dargestelltem Türkontaktschalter,
- Fig. 4: eine Vorderansicht dieser Abdichtung in Richtung des Pfeiles IV von Fig. 3,
- Fig. 5: einen gegenüber den Ausführungsbeispielen von Fig. 1 bis 4 vergrößerten senkrechten Teilschnitt durch die Abdichtungen gemäß Schnittlinie V - V von Fig. 2 und Fig. 4 bei schon eingeschraubter, jedoch noch nicht festgedrehter Kontakt- und Befestigungsschraube,
- Fig. 5a: die Abdichtung mit rohrförmigem Turmfortsatz von Fig. 5 nach Festziehen der kombinierten Kontakt- und Befestigungsschraube,
- Fig. 6: eine Fig. 5 entsprechende Darstellung einer demgegenüber abgewandelten Ausführungsform einer derartigen Abdichtung vor dem Festziehen der kombinierten Kontakt- und Befestigungsschraube,
- Fig. 6a: die Abdichtung von Fig. 6 nach dem Festziehen der Kontakt- und Befestigungsschraube und
- Fig. 7 und 8: jeweils verschiedene Gestaltungsvarianten der Kontaktplatte im Bereich der Durchführungsöffnung für die Befestigungsschraube wie auch Möglichkeiten der Gestaltung der dichtenden Teile mit noch nicht festgedrehter Kontakt- und Befestigungsschraube, während
- Fig. 7a und 8a: diese Ausführungsformen nach dem Festziehen der Kontakt- und Befestigungsschraube zeigen.

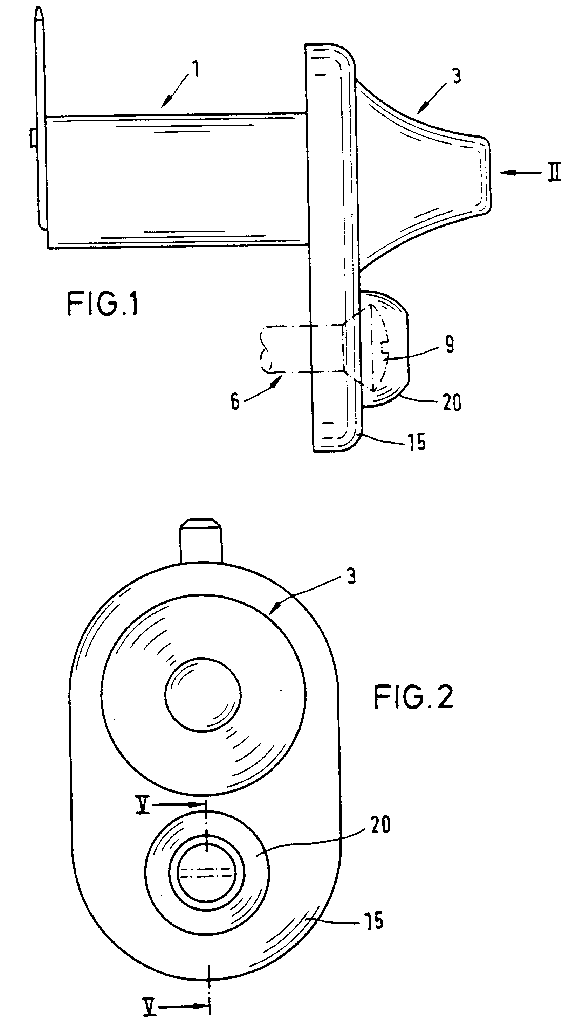

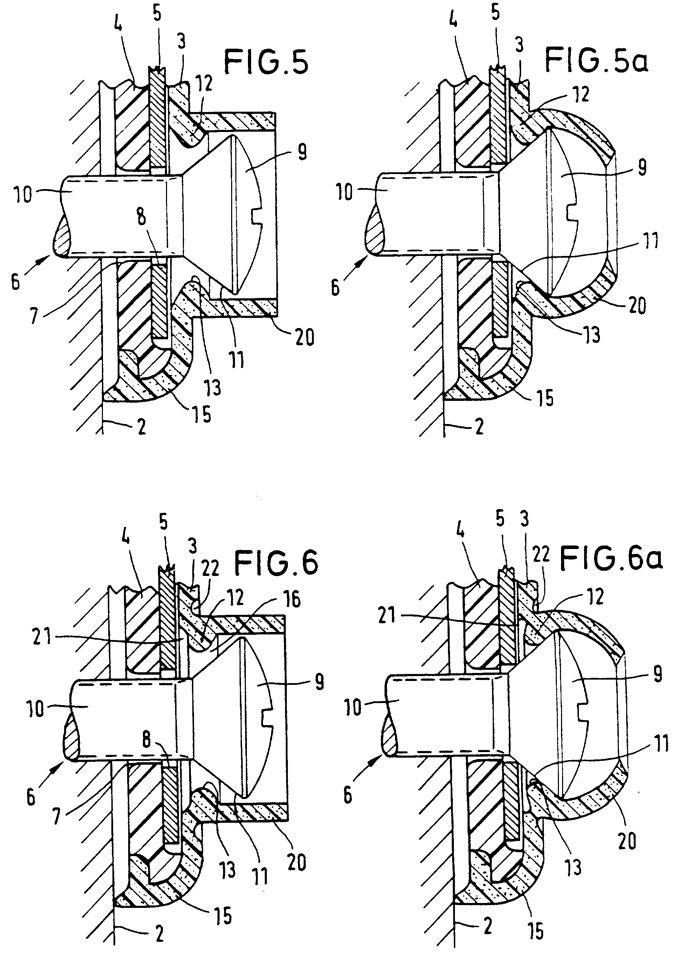

Fig. 1 zeigt einen Türkontaktschalter 1 an sich bekannter Bauart zur Befestigung an einer Trägerplatte 2 (Fig. 5 bis 6). Der nicht dargestellte Betätigungsstößel oder Betätigungsdruckknopf des Türkontaktschalters 1 ist durch eine Abdichtkappe 3 aus elastischem Material, beispielsweise Gummi oder ein geeigneter elastischer Kunststoff, geschützt, die als Faltenbalgdichtung ausgebildet ist.

Der Türkontaktschalter 1, dessen Schaltergehäuse 4 (Fig. 5, 5a, 6, 6a) aus einem elektrisch nichtleitenden Material besteht, an dem eine Kontaktplatte 5 aus einem elektrisch leitenden Material anliegt, ist mittels einer Befestigungsschraube 6, die durch eine Befestigungsöffnung 7 am Gehäuse 4 und eine damit fluchtende Durchführungsöffnung 8 an der Kontaktplatte 5 hindurchgeführt ist, an der Trägerplatte 2, beispielsweise am Karosserieblech im Bereich des Türrahmens eines Kraftfahrzeuges, befestigt.

Wie in der Zeichnung weiterhin zu erkennen ist, hat die Befestigungsschraube 6 einen nach unten zur Kontaktplatte 5 hin konisch verjüngten Schraubenkopf 9, wobei die Durchführungsöffnung 8 an der Kontaktplatte 5 einen nur geringfügig größeren Durchmesser als der Schaft 10 der Befestigungsschraube 6 aufweist, so daß der Kopf 9 der Befestigungsschraube 6 beim Anschrauben am Rand der Durchführungsöffnung 8 eine elektrisch leitende Verbindung zu der Kontaktplatte 5 herstellt.

Zwischen der Unterseite 11 des nach unten konisch verjüngten Kopfes 9 der Befestigungsschraube 6 und der Kontaktplatte 5 ist die Abdichtkappe 3 mit einer Abdichtzunge 15 und mit einer ringförmigen Dichtschulter 13 am Innenumfang der Schraubendurchführungsöffnung 16 versehen. Beim Befestigen des Schalters 1 mittels der Befestigungsschraube 6 preßt deren konische Unterseite 11 die hinterschnittene Dichtschulter 13 der nachgiebigen Dichtung 12 leicht zusammen, die dadurch rundum zur dichtenden Anlage an der konischen Unterseite 11 der Befestigungsschraube 6 kommt. Die Durchführungsöffnung 8 an der Kontaktplatte 5 hat einen etwas geringeren Innendurchmesser als die Dichtschulter 13 entsprechend der Konizität des Schraubenkopfes 9, wodurch ein übermäßiges Anziehen der Schraube 6 und somit eine Beschädigung der Abdichtkappe 3, insbesondere deren Dichtschulter 13, vermieden wird. Gleichzeitig wird eine einwandfreie elektrische Verbindung ebenso wie eine mechanische Befestigung und Abdichtung gegen Schmutz oder Feuchtigkeit ohne besonderen Kostenaufwand erreicht.

Wie in Fig. 5, 5a und Fig. 6, 6a weiterhin zu erkennen ist, weist die Dichtung 12 im Anschluß an die hinterschnittene Dichtschulter 13 einen rohrförmigen zylindrischen Turmfortsatz 20 auf, der den Kopf 9 der Befestigungsschraube 6 überragt und sich beim Anziehen der Befestigungsschraube mehr und mehr kappenförmig schließend über den Schraubenkopf 9 legt.

Während bei der Abdichtung von Fig. 5 und 5a die ringförmige Dichtschulter 13 an ihrer von dem Schraubenkopf 9 abgewandten Unterseite lediglich konisch abgeschrägt bzw. hinterschnitten ist, weist die Abdichtung von Fig. 6 und 6a außerdem eine der Kontaktplatte 5 zugewandte innenliegende ringförmige Einschnürung 21 unterhalb der Dichtschulter 13 auf.

Die Dichtschulter 13 kann hierdurch beim Festziehen der Kontakt- und Befestigungsschraube 6 durch den Schraubenkopf 9 noch stärker nach unten gedrückt werden, so daß sich der rohrförmige Turmfortsatz 20 noch dichter über dem Schraubenkopf 9 schließen kann.

Diese Wirkung kann auch noch dadurch weiter verbessert werden, wenn die Abdichtung, wie in Fig. 6 und 6a im einzelnen gezeigt ist, eine den Fußansatz des Turmfortsatzes 20 umschließende ringförmige äußere Einschnürung 22 aufweist, die zweckmäßig etwa in gleicher Höhe mit dem Fuß der innenliegenden Dichtschulter 13 angeordnet ist.

Wird bei den beiden gezeigten Ausführungsbeispielen von Fig. 5 und 6 die Schraube 6 angezogen, so wirkt die konische Fläche der Unterseite 11 des Schraubenkopfes 9 zunehmend auf die Dichtschulter 13 ein, wodurch nicht nur eine zunehmende Dichtwirkung entsteht, sondern sich auch der rohrförmige zylindrische Turmfortsatz 20 mehr und mehr schließend über den Schraubenkopf 9 legt, wie in Fig. 5a und 6a gezeigt ist.

Je nachdem, wie hoch die Dichtschulter 13 in dem Turmfortsatz 20 angeordnet sind, das heißt auch gleichzeitig, wie weit die Dichtschulter 13 beim Festziehen der Schraube 6 nach unten gedrückt wird, ehe sie auf dem Massekontaktteil des Schalters 1 zur Anlage kommt, schließt sich der Turmfortsatz 20 mehr oder weniger stark über dem Schraubenkopf 9.

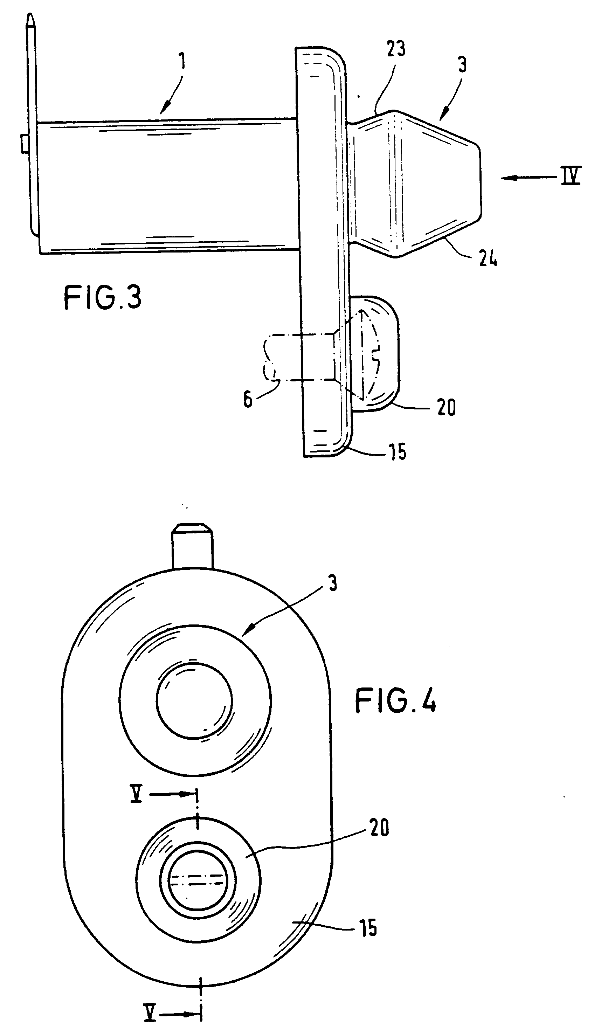

Besonders vorteilhaft ist es weiterhin, wenn die Abdichtung, die in Fig. 1 bis 4 gezeigt ist, mit einer Abdeckkappe 3 für den Stößel eines Türkontaktschalters 1 oder dergleichen ausgebildet ist, die sich zum Stößelende des Schalters 1 hin im wesentlichen konisch verjüngt und, wie in Fig. 3 gezeigt ist, je nach der Hublänge des Stößelschalters auch noch einen nach Art eines Faltenbalges konisch nach innen eingezogenen Zwischenabschnitt 23 im Anschluß an den endseitigen konischen Kappenteil 24 aufweisen kann.

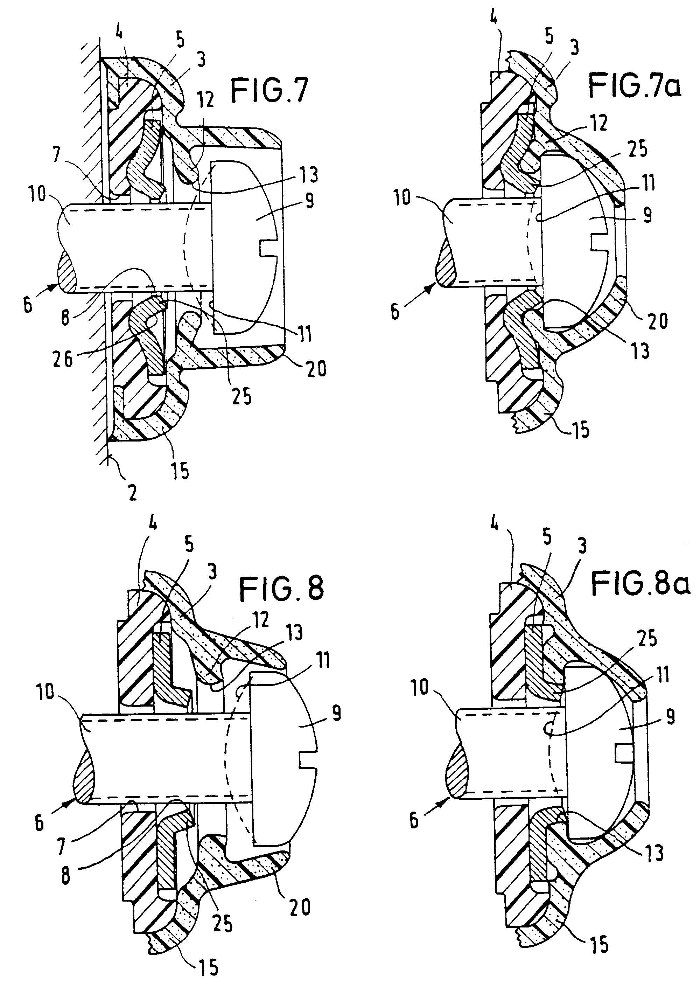

Bei den in Fig. 7, 7a, 8 und 8a gezeigten weiteren Gestaltungsvarianten haben die Befestigungsschrauben 6 einen an seiner Unterseite 11 flach oder ballig ausgebildeten Schraubenkopf 9, der beim Festziehen der Befestigungsschraube an der ringförmigen Dichtschulter 13 zur Anlage kommt und diese so weit nach unten drückt, bis er mit seiner Unterseite 11 an der Kontaktplatte 5 zur Anlage kommt. Die Kontaktplatte 5 weist hierfür bei beiden gezeigten Ausführungsbeispielen rings um die Durchführungsöffnung 8 einen ringförmigen Kragen 25 für die Anlage des Schraubenkopfes 9 auf, der von einer ringförmigen Vertiefung 26 für die Aufnahme der Dichtschulter 13 umgeben ist.

Bei dem Ausführungsbeispiel von Fig. 7 und 7a weist die Kontaktplatte 5 rings um die Durchführungsöffnung 8 eine umlaufende ringförmige Sicke auf, während bei der Ausführungsform von Fig. 8 und 8a die Kontaktplatte 5 im Bereich des ringförmigen Kragens 25 lediglich zu dem Schraubenkopf nach außen hin ausgeformt ist und bei festgezogener Schraube 6 ebenso wie die Kontaktplatte 5 von Fig. 7 und 7a die ringförmige Dichtschulter 13 unterhalb des äußeren Randes des den Kragen 25 radial überragenden Schraubenkopfes 9 aufnimmt.

Bei beiden Ausführungsformen ist die ringförmige Dichtschulter 13 an ihrem Innenumfang gegen die Unterseite 11 des Schraubenkopfes 9 wulstförmig aufgewölbt.

Die Ausführungsform von Fig. 7 und 7a weist dabei ebenso wie die Ausführungsform von Fig. 6 und 6a eine den Fußansatz des Turmfortsatzes 20 umschließende zusätzliche ringförmige äußere Einschnürung 22 auf, während bei der Ausführungsform von Fig. 8 und Fig. 8a der Turmfortsatz 20 eine zu seinem äußeren Ende hin konisch verjüngte Form hat, so daß er sich bei beiden gezeigten Ausführungsformen beim Festziehen der Befestigungsschraube 6 von außen über dem Schraubenkopf 9 schließt und diesen gegen Beschädigungen und gegen äußere Umwelteinflüsse sicher schützt.

### Liste der Bezugszeichen

1 Türkontaktschalter
2 Trägerplatte
3 Abdichtkappe
4 Schaltergehäuse
5 Kontaktplatte
6 Befestigungsschraube
7 Befestigungsöffnung
8 Durchführungsöffnung
9 Schraubenkopf
10 Schaft
11 Unterseite
12 Dichtung
13 Dichtschulter
15 Abdichtzunge
16 Durchführungsöffnung
20 Turmfortsatz
21 Einschnürung, innere
22 Einschnürung, äußere
23 Zwischenabschnitt
24 Kappenteil
25 Kragen
26 Vertiefung

## Patentansprüche

1. Kombination einer Abdichtung und einer Kontaktplatte (5) mit einer Kontakt- und Befestigungsschraube (6) für elektrische Schaltgeräte oder Anschlußteile und einer elastisch nachgiebigen Dichtung (12), in die eine ringförmige Dichtschulter (13) integriert ist, die beim Anziehen der Befestigungsschraube (6) gegen deren Schraubenkopf (9) abdichtet, wobei die Durchführungsöffnung (8) für die Befestigungsschraube (6) an einer Kontaktplatte (5) des Schaltgerätes oder der Anschlußteile ebenso wie die Dichtschulter (13) einen nur geringfügig größeren Innendurchmesser als der Schaft (10) der Befestigungsschraube (6) derart aufweist, daß der Kopf (9) der Befestigungsschraube (6) beim Anschrauben am Rand der Durchführungsöffnung (8) eine elektrisch leitende Verbindung zu der Kontaktplatte (5) herstellt, und wobei die Dichtung (12) im Anschluß an die Dichtschulter (13) einen rohrförmigen Turmfortsatz (20) aufweist, der den Kopf (9) der Befestigungsschraube (6) überragt, **dadurch gekennzeichnet,** daß die Dichtschulter (13) der Dichtung (12) derart hinterschnitten ist, daß sich der Turmfortsatz (20) beim Anziehen der Befestigungsschraube mehr und mehr kappenförmig schließend über den Schraubenkopf (9) legt.

2. Kombination nach Anspruch 1, **dadurch gekennzeichnet,** daß der Turmfortsatz (20) eine zylindrische oder eine zu seinem äußeren Ende hin konisch verjüngte Form hat.

3. Kombination nach Anspruch 1 oder 2, **dadurch gekennzeichnet,** daß die Dichtung (12) unterhalb der Dichtschulter (13) eine der Kontaktplatte (5) zugewandte innenliegende ringförmige Einschnürung (21) aufweist.

4. Kombination nach einem der Ansprüche 1 bis 3, **dadurch gekennzeichnet,** daß die Kontaktplatte (5) rings um die Durchführungsöffnung (8) einen ringförmigen Kragen (25) für die Anlage des Schraubenkopfes (9) aufweist, der von einer ringförmigen Vertiefung (26) für die Aufnahme der Dichtschulter (13) umgeben ist.

5. Kombination nach einem der Ansprüche 1 bis 4, **dadurch gekennzeichnet,** daß die ringförmige Dichtschulter (13) an ihrem Innenumfang gegen die Unterseite (11) des Schraubenkopfes (9) wulstförmig aufgewölbt ist.

6. Kombination nach einem der Ansprüche 1 bis 5, **dadurch gekennzeichnet,** daß die Dichtung (12) eine den Fußansatz des Turmfortsatzes (20) umschließende ringförmige äußere Einschnürung (22) aufweist.

7. Kombination nach Anspruch 6, **dadurch gekennzeichnet,** daß die ringförmige äußere Einschnürung (22) etwa in gleicher Höhe mit dem Fuß der innenliegenden Dichtschulter (13) angeordnet ist.

8. Kombination nach einem der Ansprüche 1 bis 7, **dadurch gekennzeichnet,** daß die Abdichtung mit einer sich zum Stößelende hin im wesentlichen konisch verjüngenden Abdeckkappe (3) für den Stößel des Schalters (1) einstückig ausgebildet ist.

9. Kombination nach Anspruch 8, **dadurch gekennzeichnet,** daß die Abdeckkappe (3) für den Stößel des Schalters (1) im Anschluß an den endseitigen konischen Kappenteil (24) einen nach Art eines Faltenbalges konisch nach innen eingezogenen Zwischenabschnitt (23) aufweist.

## Claims

1. Combination of a seal and a contact plate (5) with a fastening screw for making electrical contact (6) for electrical switching devices or connecting parts and a resiliently pliable seal (12) having an integral annular sealing shoulder (13) which, when the fastening screw (6) is tightened, is pressed against the screw head (9) in sealing manner whereby the inner diameter of the feed- through aperture (8) for the fastening screw (6) in a contact plate (5) of the switching device or of the connecting parts as well as the inner diameter of the sealing shoulder (13) is only slightly larger than that of the shank (10) of the fastening screw (6), so that at the edge of the feed-through aperture (8) the head (9) of the fastening screw (6) makes an electrically conductive connection with the contact plate (5) as it is tightened and whereby, next to the sealing shoulder (13) the seal (12) is provided with a tubular topping element (20) projecting above the head (9) of the fastening screw (6), characterised in that the sealing shoulder (13) of the seal (12) is undercut in such a way as to ensure that when the fastening screw is tightened the topping element (20) is increasingly applied to the screw head (9) so as to close over it in the manner of a cap.

2. Combination according to Claim 1, characterised in that the shape of the topping element (20) is cylindrical or conically tapering towards its outer end.

3. Combination according to Claim 1 or 2, characterised in that below the sealing shoulder (13) the seal (12) is provided with an inner annular recess (21) facing the contact plate (5).

4. Combination according to one of Claims 1 to 3, characterised in that around the feed-through aperture (8) the contact plate (5) is provided with an annular collar (25) for application of the screw head (9), said collar being surrounded by an annular hollowed section (26) for accommodating the sealing shoulder (13).

5. Combination according to one of Claims 1 to 4, characterised in that at its inner periphery the annular sealing shoulder (13) arches upward in the manner of a bead towards to the underside (11) of the screw head (9).

6. Combination according to one of Claims 1 to 5, characterised in that the seal (12) is provided with an outer annular recess (22) surrounding the start of the foot of the topping element (20).

7. Combination according to Claim 6, characterised in that the outer annular recess (22) is arranged roughly at the same level as the foot of the inner sealing shoulder (13).

8. Combination according to one of Claims 1 to 7, characterised in that the seal is formed in one piece with a covering cap (3) for the plunger of the switch (1), with said cap substantially conically tapering towards the end of the plunger.

9. Combination according to Claim 8, characterised in that the covering cap (3) for the plunger of the switch (1) has, adjacent to the conical cap end section (24), an intermediate section (23) tapering conically inward in the manner of a concertina.

## Revendications

1. Combinaison d'un joint d'étanchéité et d'une plaque de contact (5) avec une vis de contact et de fixation (6) pour des appareils de commutation électriques ou des pièces de raccordement et un, joint d'étanchéité (12) déformable élastiquement dans lequel est intégré un épaulement d'étanchéité (13) en forme d'anneau qui, lors du serrage de la vis de fixation (6), produit un effet d'étanchéité contre sa tête de vis (9), l'ouverture de passage (8) destinée à la vis de fixation (6) présentant, sur une plaque de contact (5) de l'appareil de commutation ou des parties de raccordement ainsi que l'épaulement d'étanchéité (13), un diamètre intérieur qui n'est que légèrement supérieur à celui de la tige (10) de la vis de fixation (6), de manière que la tête (9) de la vis de fixation (6) établisse, lors du vissage, sur le bord de l'ouverture de passage (8) une liaison conductrice de l'électricité avec la plaque de contact (5), et le joint d'étanchéité (12) présentant, connexe à l'épaulement d'étanchéité (13), un prolongement en tour (20) tubulaire qui dépasse de la tête (9) de la vis de fixation (6), caractérisée en ce que l'épaulement d'étanchéité (13) du joint d'étanchéité (12) est doté d'une contre-dépouille telle que le prolongement en tour (20) vienne se placer, avec un effet de fermeture, sur la tête de vis (9), en prenant de plus en plus une forme de capuchon, lors du serrage de la vis de fixation.

2. Combinaison selon la revendication 1, caractérisée en ce que le prolongement en tour (20) a une forme cylindrique ou une forme effilée coniquement en direction de son extrémité extérieure.

3. Combinaison selon la revendication 1 ou 2, caractérisée en ce que le joint d'étanchéité (12) présente, au-dessous de l'épaulement d'étanchéité (13), un étranglement (21) annulaire intérieur tourné vers la plaque de contact (5).

4. Combinaison selon l'une des revendications 1 à 3, caractérisée en ce que la plaque de contact (5) présente, tout autour de l'ouverture de passage (8), une collerette annulaire (25) destinée à l'appui de la tête de vis (9) et entourée par une cavité annulaire (26) destinée à loger l'épaulement d'étanchéité (13).

5. Combinaison selon l'une des revendications 1 à 4, caractérisée en ce que l'épaulement d'étanchéité annulaire (13) est bombé en, forme de bourrelet sur sa périphérie intérieure contre la face inférieure (11) de la tête de vis (9).

6. Combinaison selon l'une des revendications 1 à 5, caractérisée en ce que le joint d'étanchéité (12) présente un étranglement extérieur annulaire (22) enclosant l'appendice de pied du prolongement en tour (20).

7. Combinaison selon la revendication 6, caractérisée en ce que l'étranglement extérieur annulaire (22) est disposé à peu près au même niveau que le pied de l'épaulement d'étanchéité intérieur (13).

8. Combinaison selon l'une des revendications 1 à 7, caractérisée en ce que le joint d'étanchéité est réalisé d'une seule pièce avec le capuchon de recouvrement (3) allant en s'effilant sensiblement coniquement vers l'extrémité de poussoir et destiné au poussoir de l'interrupteur (1).

9. Combinaison selon la revendication 8, caractérisée en ce que le capuchon de recouvrement (3) présente pour le poussoir de l'interrupteur (1), en position connexe à la partie capuchon (24) conique située à une extrémité, une section intermédiaire (23) rétractée coniquement vers l'intérieur, à la façon d'un soufflet.
